# EUROPÄISCHE PATENTSCHRIFT

(11) **EP 3 298 668 B1**
(45) Veröffentlichungstag und Bekanntmachung des Hinweises auf die Patenterteilung: **13.03.2019**
(21) Anmeldenummer: 16723115.8
(22) Anmeldetag: 17.05.2016
(51) Int. Cl.: H02G 3/04, H02G 9/04, E01C 13/00, G07C 1/22, H01Q 9/04, H04B 5/00

(54) **AUFBODENKANAL**
FLOOR CABLE CHANNEL
CANAL À POSER AU SOL

(30) Priorität: 22.05.2015 DE 102015006502
(43) Veröffentlichungstag der Anmeldung: 28.03.2018
(73) Patentinhaber: race result AG, 76327 Pfinztal (DE)
(72) Erfinder: KLOHR, Nikias, 76297 Stutensee (DE); GAISER, Konstantin, 76227 Karlsruhe (DE)
(74) Vertreter: Durm Patentanwälte PartG mbB
(86) Internationale Anmeldenummer: PCT/EP2016/061009
(87) Internationale Veröffentlichungsnummer: WO 2016/188798

(56) Entgegenhaltungen:
- WO-A1-2009/011600
- WO-A1-2015/004654
- DE-A1- 2 312 987
- GB-A- 2 510 633

## Beschreibung

Die vorliegende Erfindung betrifft einen Aufbodenkanal zum Verlegen eines Leitungselements auf einem Untergrund und zum Schutz des Leitungselements vor externen Krafteinwirkungen, mit einem ersten Kanalelement und einem zweiten Kanalelement zur Aufnahme des Leitungselements; und einem Verbindungselement zum Verbinden des ersten Kanalelements mit dem zweiten Kanalelement an Stirnseiten des ersten Kanalelements und des zweiten Kanalelements.

Aufbodenkanäle dieser Art werden beispielsweise als Kabelbrücken, Kabelkanäle oder Schlauchbrücken eingesetzt. Das Leitungselement soll vor externen Krafteinwirkungen geschützt werden. Externe Krafteinwirkungen bezeichnen in diesem Zusammenhang insbesondere alle Arten von Kräften durch Personen, Fahrzeuge oder abgestellte Gegenstände, die auf das Leitungselement einwirken. Beispielsweise soll ein elektrisches Kabel vor einer direkten Exposition gegenüber Personen oder Fahrzeugen, die das Kabel überqueren, geschützt werden.

Dieser Schutz wird erreicht, indem das Leitungselement in einem Kanal auf dem Boden verlegt wird, in dem es vor externen Krafteinwirkungen geschützt ist. Der Aufbodenkanal bzw. die Kanalelemente sind dazu ausgebildet externe Krafteinwirkungen aufzunehmen und das Leitungselement zu schützen. Während des Betriebs des Aufbodenkanals befindet sich dieser demnach zumeist auf einem Untergrund. Die Kanalelemente sind entlang einer Längsachse hintereinander angeordnet und erlauben es eine bestimmte Länge zu überspannen, auf der das Leitungselement im Aufbodenkanal geschützt werden soll.

Herkömmlicherweise werden mehrere Kanalelemente mittels Verbindungselementen zu einem Aufbodenkanal verbunden. Durch eine solche Aneinanderreihung mehrerer Elemente wird erreicht, dass mehr oder weniger beliebig lange Straßen, Fußgängerwege etc. überquert werden können. Je nachdem, welche Länge des Aufbodenkanals erforderlich ist, kann im Prinzip eine beliebige Anzahl an Kanalelementen kombiniert werden.

Herkömmliche Aufbodenkanäle werden oft erst am Einsatzort je nach Anwendung über ein Verbindungselement zu einer erforderlichen Länge kombiniert, beispielsweise durch Zusammenstecken. Zumeist erlaubt das Verbindungselement dabei eine lösbare Verbindung. Es ist hierbei möglich, dass Verbindungselement fest mit dem ersten oder zweiten Kanalelement verbunden oder auch als separates Element ausgeführt ist. Normalerweise erlaubt das Verbindungselement insofern ein flexibles Verbinden, als die Kanalelemente lösbar und oder auch gegeneinander drehbar verbunden sind. Nach dem Kombinieren kann dann das Leitungselement eingelegt werden. Hierzu ist beispielsweise ein abnehmbarer Deckel vorgesehen, der zum Einlegen des Leitungselements abgenommen werden kann. Ebenfalls ist eine Ausgestaltung mit einem Querschnitt in Form eines Überstands, in den das Leitungselement eingelegt werden kann, möglich.

In WO 02/071566 A2 wird eine Kabelbrücke mit mindestens einem Kabelkanal, der mit einem Deckel verschließbar ist und auf beiden Seiten jeweils keilförmig ausgeführt ist, um ein Überqueren der Kabelbrücke zu vereinfachen, beschrieben.

In DE 10 2006 048 474 A1 wird ein Abschluss- und/oder Verbindungsstück zur Befestigung am Ende wenigstens eines Abdeckprofils für Leitungen beschrieben. Bei dem Abschluss- und/oder Verbindungsstück sind erste zwischen dem Abschluss- und/oder Verbindungsstück und dem Abdeckprofil wirkende Verbindungsmittel zum Herstellen einer bezogen auf eine erste Achsrichtung radialen formschlüssigen Verbindung zwischen dem Abdeckprofil und dem Abschluss- und/oder Verbindungsstück durch Stecken oder Fügen sowie durch zweite in dem Abschluss- und/oder Verbindungsstück integrierte, zwischen diesem und dem Abdeckprofil wirkende und in dieses Profil eingreifende Verbindungsmittel für ein Fixieren der Verbindung in axialer Richtung vorgesehen.

In US 2010/0265801 A1 werden ein Zeitmesssystem und ein Zeitmessverfahren beschrieben. Das System strahlt in eine längliche Zeitmesszone, sodass RFID Transponder in dieser Zone Identifikationssignale übermitteln, die zum Erzeugen einer den Wettkämpfern zugeordneten Zeitmessinformation verwendet werden. Eine Panelantenne ist bevorzugt am Boden vorgesehen, um die längliche Zeitmesszone zu erzeugen und das System wird bevorzugt in UHF betrieben. Der RFID Tag verwendet bevorzugt eine Einschnitt-Antenne und kann in eine Kreditkarte integriert werden.

In WO 2015/004654 A1 wird ein biegbares Flachkabel offenbart. Das Flachkabel besteht aus stabilen, flachen Platten, die miteinander verbunden sind, um eine lange Kette zu bilden. Die Platten bestehen aus einem starren Material und weisen an Ihrer Unterseite Kanäle für elektrische Leiter auf.

In GB 2510633 A wird ein temporärer Pfad offenbart, der aus einer Reihe von Streben oder Paneelen oder einem gitterartigen Material aufgebaut ist, das mit einem Gewebe verbunden oder darin eingeschlossen ist. Das Gewebe bildet eine flexible Verbindung zwischen den Streben oder Platten, wodurch der Weg gefaltet oder aufgerollt werden kann.

In DE 2 312 987 A wird ein dachartig ausgebildetes Kabelabdeckteil offenbart. Das Kabelabdeckteil besteht vorzugsweise aus Kunststoff, mit nach oben vorstehenden Verbindungselementen zur aufeinanderfolgenden Verbindung der Kabelabdeckteile zu einer endlosen Kette.

In WO 2009/011600 A1 werden ein Zeitmesssystem und ein Zeitmessverfahren offenbart. Eine längliche Zeitmessregion wird ausgeleuchtet, sodass ein darin befindlicher RFID Transponder ein Identifizierungssignal übermittelt.

Ein mögliches Einsatzszenario für Aufbodenkanäle findet sich im Bereich der Zeitmessung für Sportveranstaltungen, insbesondere Laufsportveranstaltungen. Sportler tragen Funkelemente (z.B. aktive oder passive RFID Tags) bei sich, die beispielsweise in eine Startnummer integriert oder am Schnürsenkel befestigt sein können. Im Fall von Radsportveranstaltungen ist es möglich am Lenker eines Fahrrads entsprechende Funkelemente anzubringen. Durch elektrische Leitungen im Aufbodenkanal werden Antennen kontaktiert, die ebenfalls im Aufbodenkanal enthalten, beidseitig zur Strecke vertikal positioniert oder auch in anderer Weise angeordnet sein können. Die Zeitmessung erfolgt dabei zumeist mittels einer entsprechenden Ausleseeinheit, die über elektrische Leiter mit der Antenne verbunden ist. Die Ausleseeinheit befindet sich üblicherweise seitlich der Strecke. Daher ist es erforderlich, dass ein elektrischer Leiter die Strecke überquert. Durch die Verwendung eines Aufbodenkanals wird dieser Leiter vor Einwirkungen durch Sportler oder Fahrzeuge, die den Aufbodenkanal überqueren, geschützt. Zudem kann erreicht werden, dass Sportler nicht von Kabeln auf der Strecke behindert werden. Beim Überqueren bzw. Passieren der Antenne erfolgt die Zeitmessung durch Kommunikation mit dem Funkelement. Die Zeitmessung erfolgt beispielsweise im Start- und Zielbereich oder auch als Zwischenzeitmessungen auf der Strecke.

Eine Problemstellung in diesem Feld ist, dass Zeitmessungen bei Sportveranstaltungen oft mobil bzw. temporär erfolgen. Die Messung erfolgt für einen absehbaren Zeitraum, beispielsweise einen Tag. Zwar sind ebenfalls Anwendungen denkbar, bei denen eine festinstallierte Zeitmesseinrichtung vorteilhaft sein kann, jedoch wird ein Großteil der Sportveranstaltungen innerhalb einer absehbaren Zeit durchgeführt. Oft bleibt auch für den Auf- und Abbau nur ein begrenztes Zeitfenster. Demnach muss die Zeitmesseinrichtung komfortabel auf- und abbaubar sein. Normalerweise wird ein Aufbodenkanal zum Ort der Veranstaltung transportiert, um dort aufgebaut zu werden. Nach der Veranstaltung wird der Aufbodenkanal zum Transport wieder abgebaut. Oft werden entsprechende Zeitmesssysteme mitsamt dem zugehörigen Aufbodenkanal auch versendet.

Die Verwendung herkömmlicher Aufbodenkanäle hat in diesem Anwendungsfeld den Nachteil, dass der Auf- und Abbau relativ viel Zeit in Anspruch nehmen kann. Zudem sind oft die zu transportierenden Einzelteile sperrig und schwer transportierbar. Schwierigkeiten beim Aufbau können sich beispielsweise auch ergeben, wenn mehrere Leitungselemente jeweils verschiedenen Antennen zugeordnet sind und entsprechend kontaktiert werden müssen.

Die vorliegende Erfindung hat daher die Aufgabe einen Aufbodenkanal zum Verlegen eines Leitungselements und auf einem Untergrund und zum Schutz des Leitungselements vor externen Krafteinwirkungen zu schaffen. Insbesondere soll ein Aufbodenkanal geschaffen werden, der im Vergleich zu herkömmlichen Aufbodenkanälen besser transportierbar und/oder auf- und abbaubar ist. Zudem hat die vorliegende Erfindung die Aufgabe eine Bodenantenne sowie ein auf dieser Bodenantenne basierendes Zeitmesssystem zu schaffen.

Gemäß einem Aspekt der Erfindung wird diese Aufgabe dadurch gelöst, dass das Verbindungselement gelenkartig ausgebildet ist und eine Drehbewegung des ersten Kanalelements in Bezug zu dem zweiten Kanalelement um eine Drehachse orthogonal zu einer ersten Längsachse des ersten Kanalelements und orthogonal zu einer zweiten Längsachse des zweiten Kanalelements erlaubt, durch die der Aufbodenkanal in eine Transportposition, in der die Kanalelemente parallel zueinander angeordnet sind und in eine Betriebsposition, in der die Kanalelemente entlang ihrer Längsachsen hintereinander angeordnet sind, gebracht werden kann,
wobei das Leitungselement ein elektrischer Leiter ist und das erste Kanalelement und das zweite Kanalelement zur Aufnahme des elektrischen Leiters und einer Antenne ausgebildet sind, wobei sich der elektrische Leiter und die Antenne in der Transportposition im Aufbodenkanal befinden können.

Das gelenkartig ausgebildete Verbindungselement erlaubt das Ausführen einer Drehbewegung der Kanalelemente zueinander. Beispielsweise kann das Verbindungselement in Form eines Gelenks ausgebildet sein und fest mit beiden Kanalelementen verbunden sein. Die Drehbewegung wird dann direkt durch das Gelenk erreicht. Denkbar ist auch die Verwendung eines Verbindungselements, das ein elastisches Material, beispielsweise ein Elastomer umfasst, durch dessen Flexibilität die Drehbewegung ausgeführt werden kann. Die Drehbewegung wird dann durch Deformieren des Verbindungselements erreicht. Ebenfalls ist eine drehbare Lagerung des Verbindungselements an zumindest einem Kanalelement möglich. Die Drehbewegung kommt dann durch ein Drehen bezüglich des zumindest einen Lagerpunkts zustande. Die gelenkartige Ausbildung umfasst also insbesondere eine Ausbildung als Gelenk, eine Ausbildung als elastisches Element
und eine Ausbildung als drehbar gelagertes festes Element bzw. Scharnier. Weitere Möglichkeiten zum Erreichen derselben Funktion sind denkbar. Das gelenkartig ausgebildete Verbindungselement kann mit einem oder mit beiden Kanalelement fest oder lösbar verbunden sein. Das Verbindungselement kann auch einen Teil des Kanalelements bezeichnen. Das Verbindungselement kann starr oder elastisch ausgebildet sein.

Üblicherweise wird das Leitungselemente entlang einer Längsachse der Kanalelemente durch die Kanalelemente geleitet. Die Drehbewegung erfolgt bezüglich einer Drehachse, die orthogonal zur Längsachse der Kanalelemente steht. Die Kanalelemente werden um 180° umeinander gedreht. Das Drehen entspricht demnach einem Zusammenklappen oder aus Zusammenfalten der Kanalelemente. Die Kanalelemente sind sozusagen faltbar. Durch die Drehung kann die Länge des Aufbodenkanals für den Transport vermindert werden. Im geklappten Zustand (also in der Transportposition des Aufbodenkanals) sind die Kanalelemente parallel zueinander angeordnet. Demnach ist die Länge des Aufbodenkanals geringer als in der Betriebsposition, sodass ein Transport bei gleichzeitig geringerem Auf- und Abbauaufwand vereinfacht wird. Die Kanalelemente können während des Transports verbunden bleiben.

Der Aufbau des Aufbodenkanals erfolgt durch ein Aufklappen oder Auseinanderfalten der Kanalelemente (der Aufbodenkanal wird in die Betriebsposition gebracht). In der Betriebsposition weist der Aufbodenkanal durch die Aneinanderreihung der Kanalelemente eine maximale Länge auf. Am Einsatzort ist es ausreichend die Klappbewegung auszuführen und den Aufbodenkanal in die Betriebsposition zu bringen. Nach der Verwendung kann der Abbau durch einfaches Einklappen erfolgen. Hierdurch wird es möglich, die Auf- und Abbauvorgänge zu beschleunigen.

Das erfindungsgemäße Verbindungselement hat gegenüber herkömmlichen Aufbodenkanälen den Vorteil, dass der Aufbodenkanal in vormontierter Weise transportiert werden kann. Das Leitungselement oder auch weitere Elemente können sich während des Transports im Aufbodenkanal befinden. Am Einsatzort erfolgt der Aufbau durch ein einfaches Auseinanderklappen. Es ist nicht erforderlich, dass zunächst Kanalelemente verbunden und dann ein Leitungselement eingelegt wird. Dadurch wird der Auf- und Abbau deutlich erleichtert. Zudem wird unfachmännisches oder falsches Aufbauen durch ungeschultes Personal verhindert oder zumindest er-schwert. Das separate Transportieren einzelner Kleinteilte wird vermieden, wodurch die Fehleranfälligkeit verringert werden kann. Des Weiteren kann auch die Stabilität erhöht werden.

Ein weiterer Aspekt der Erfindung betrifft eine Bodenantenne zum Einsatz in der Zeitmessung bei Sportveranstaltungen, mit: einem Aufbodenkanal wie oben beschrieben; einem elektrischen Leiter, der in dem Auf-bodenkanal aufgenommen ist; und einer Antenne, insbesondere einer Patch-antenne oder einer Slotantenne, die in dem Aufbodenkanal aufgenommen und durch den elektrischen Leiter ansteuerbar ist. Die Antenne oder die An-tennen im Aufbodenkanal können durch entsprechende Zuleitungen (elektrische Kabel) im Aufbodenkanal mit einer entsprechenden Ansteuereinheit ne-ben der Strecke verbunden sein. Demnach entspricht der Aufbodenkanal mit eingelegter Antenne und entsprechender Zuleitung einer Bodenantenne. Im Bereich der Laufzeitmessung ist es vorteilhaft die Antenne direkt im Aufbodenkanal aufzunehmen und somit die Verwendung von unfallgefährlicheren und weniger zuverlässigen Seitenantennen zu vermeiden.

Die Bodenantenne kann einfach und schnell am Einsatzort aufgeklappt und einsatzfähig gemacht werden.

Ein weiterer Aspekt betrifft ein Zeitmesssystem zur Zeitmessung bei Sportveranstaltungen, mit: einer Bodenantenne wie zuvor beschrieben; einem mobilen Transponder zur drahtlosen Übermittlung von Signalen an die Antenne; und einer mobilen Basisstation, die über den elektrischen Leiter mit der Antenne verbunden ist, zur Ansteuerung der Antenne und zur Auswertung empfangener Signale von dem mobilen Transponder zur Zeitmessung. Das Zeitmesssystem kann einfach und schnell am Einsatzort auf- und abgebaut werden. Der Auf- und Abbau ist im Vergleich zu früheren System weniger fehleranfällig in Bezug auf die Verkabelung. Das Zeitmesssystem kann durch die faltbare Bodenantenne in relativ geringer Packungsgröße transportiert oder verschickt werden.

In einer bevorzugten Ausgestaltung des erfindungsgemäßen Aufbodenkanals ist das Verbindungselement einstückig ausgebildet und an seiner Kontaktstelle zum ersten Kanalelement und/oder an seiner Kontaktstelle zum zweiten Kanalelement drehbar gelagert. Das Verbindungselement kann starr ausgeführt sein und muss keine eigene Flexibilität aufweisen. Ein einstückiges Verbindungselement kann effizient und kostengünstig hergestellt werden. Zudem ergeben sich Effizienzvorteile bei der Montage. Einerseits kann das Verbindungselement beidseitig drehbar gelagert sein, andererseits kann das Verbindungselement mit einem Kanalelement starr verbunden und nur am anderen Kanalelement drehbar gelagert sein.

Gemäß einer Ausgestaltung weisen das erste Kanalelement und das zweite Kanalelement an ihren dem Verbindungselement zugewandten Stirnseiten zylinderförmige Fortsätze auf und weist das Verbindungselement eine erste und eine zweite Aussparung zur Aufnahme der zylinderförmigen Fortsätze auf; und/oder weist das Verbindungselement zylinderförmige Fortsätze auf und weisen das erste Kanalelement und das zweite Kanalelement an ihren dem Verbindungselement zugewandten Stirnseiten Aussparungen zur Aufnahme der zylinderförmigen Fortsätze auf, wobei die zylinderförmigen Fortsätze mit den Aussparungen zusammenwirken, um das Verbindungselement beidseitig drehbar zu lagern.

Die Aussparungen nehmen die zylinderförmigen Fortsätze auf und erlauben eine Drehbewegung um die zylinderförmigen Fortsätze. Die zylinderförmigen Fortsätze können an den Kanalelementen oder am Verbindungselement vorgesehen sein. Die Aussparungen bilden jeweils das Gegenstück an den Kanalelementen oder am Verbindungselement. Die Aussparungen umfassen die zylinderförmigen Fortsätze vollständig oder teilweise und nehmen diese auf. Durch den runden Querschnitt der zylinderförmigen Fortsätze und der Aussparungen können die zylinderförmigen Fortsätze in den Aussparungen gedreht werden. Die Aussparungen und die zylinderförmigen Fortsätze bilden ein Drehlager. Die Drehachse ist parallel zu einer Zentralachse der zylinderförmigen Fortsätze. Eine Bewegung orthogonal zur Drehachse wird unterbunden, sodass die Länge des Aufbodenkanals definiert ist. Die zylinderförmigen Fortsätze können einseitig oder auf beiden Seiten mit dem Kanal- oder Verbindungselement verbunden sein. Diese Ausgestaltung der Kanalelemente und des Verbindungselements erlaubt eine einfache und kostengünstige Herstellung und Montage. Zudem kann eine robuste und beständige Verbindung erreicht werden. Zylinderförmig bedeutet in diesem Zusammenhang, dass die Fortsätze zumindest teilweise einen kreis- oder kreisabschnittförmigen Querschnitt haben. Insbesondere ist gemeint, dass die Fortsätze so ausgebildet sind, dass die Aussparungen um sie gedreht werden können.

In einer bevorzugten Ausgestaltung weisen ein erstes Drehlager zwischen dem Verbindungselement und dem ersten Kanalelement und ein zweites Drehlager zwischen dem Verbindungselement und dem zweiten Kanalelement, jeweils einen Freiheitsgrad von 180°auf und bewirken einen Gesamtfreiheitsgrad des ersten Kanalelements und des zweiten Kanalelements von 360°. Die Zusammenwirkung entspricht einem Drehlager oder einem Drehgelenk. Die Zusammenwirkung des zylinderförmigen Fortsatzes
mit der Aussparung an der Verbindungsstelle des Verbindungselements mit dem ersten Kanalelement hat demnach einen Drehfreiheitsgrad von 180°. Die zweite Verbindungsstelle des Verbindungselements mit dem zweiten Kanalelement ist entsprechend ausgeführt. Beide Freiheitsgrade addieren sich zu einem Gesamtfreiheitsgrad von 360° der beiden Kanalelemente zueinander. Dieser Gesamtfreiheitsgrad von 360° bedingt, dass die beiden Kanalelementen beidseitig drehbar bzw. faltbar sind. Die Drehachse ist parallel zum Untergrund.

Die Verbindung der beiden Kanalelemente entspricht sozusagen einem Doppelscharnier. Einerseits kann eine Drehung durchgeführt werden, bei der das erste Kanalelement auf das zweite Kanalelement gedreht wird. Andererseits kann auch das erste Kanalelement unter das zweite Kanalelement gedreht werden. Je nachdem welche Drehung ausgeführt wird, kommen die Ober- oder Unterseiten der Kanalelemente miteinander in Kontakt in der parallelen Anordnung der Kanalelemente. Die Drehachsen beider Verbindungsstellen fallen dabei nicht aufeinander. Es ist möglich, zunächst um die eine und dann um die andere Verbindungsstelle zu drehen oder auch um beide Verbindungsstellen gleichzeitig zu drehen. Die Drehachse der Drehung der beiden Kanalelemente entspricht dann zunächst der Drehachse der Drehung um die erste Verbindungsstelle und dann der Drehachse der Drehung um die zweite Verbindungsstelle. Je nachdem in welche Richtung gedreht wird, sind in der Transportposition also die Oberseiten oder die Unterseiten der Kanalelemente einander zugewandt. Hierdurch werden die Flexibilität und der Komfort beim Auf- und Abbau weiter erhöht. Insbesondere wird die Flexibilität erhöht, wenn mehr als zwei Kanalelemente durch mehrere Verbindungselemente aneinandergereiht sind. Diese verketteten Kanalelemente können dann in der Art einer Ziehharmonika gefaltet werden. Ein Kanalelement mit jeweils einem benachbarten Kanalelement auf beiden Seiten ist dann mit seiner Oberseite in Kontakt mit der Oberseite seines ersten Nachbarn und mit seiner Unterseite in Kontakt mit der Unterseite seines zweiten Nachbarn.

Gemäß einer weiteren bevorzugten Ausgestaltung ist das Verbindungselement doppelhakenförmig zum Einhaken an den zylinderförmigen Fortsätzen ausgebildet, wobei die Aussparungen einen im Wesentlichen kreisabschnittförmigen Querschnitt aufweisen und ein Innenkreisradius der Aussparungen jeweils einem Radius der zylinderförmigen Fortsätze an den Kanalelementen entspricht. Das doppelhakenförmige Verbindungselement hat zwei Aussparungen zur Aufnahme der zylinderförmigen Fortsätze. Hierdurch wird ein gelenkartiges Zusammenwirken erreicht. Die Aussparungen am Verbindungselement sind einseitig offen und können an den zylinderförmigen Fortsätzen eingehakt werden. Die offenen Aussparungen bilden sozusagen Haken. Hierdurch wir eine einfache Herstellung und ein einfacher Zusammenbau des Aufbodenkanals ermöglicht. Die Kanalelemente und das Verbindungselement können separat gefertigt und nach der Fertigung verbunden werden. Zudem ist die Verbindung lösbar. Das Verbinden und Lösen der Verbindung kann mittels eines geeigneten Werkzeugs erfolgen. Insbesondere werden aber auch ein Verbinden und ein Lösen ohne Werkzeug ermöglicht.

In einer bevorzugten Ausgestaltung ist das Verbindungselement durch elastische Verformung lösbar an den zylinderförmigen Fortsätzen festlegbar; und/oder ist der Abstand der Mittelpunkte der durch die kreisabschnittförmigen Aussparungen beschriebenen Innenkreise in einem ersten Zustand des Verbindungselements durch elastische Verformung größer als in einem zweiten Zustand des Verbindungselements. Ein zumindest teilweise elastisches Verbindungselement kann sich beispielsweise beim Einhaken an den zylinderförmigen Fortsätzen kurzzeitig Verformen und sich dann in der eingehakten Position wieder entspannen. Die Verbindung ist daher nicht ohne weiteres, sondern nur durch eine Krafteinwirkung lösbar. Dieser Effekt kann beispielsweise dadurch erreicht werden, dass die Aussparungen in einem Winkelbereich <180° geöffnet sind. Ebenfalls ist die Verwendung einer Ausprägung als Rückzusicherung möglich, die einen Rückzug der zylinderförmigen Fortsätze nach dem Festlegen verhindert. Ein elastisches Verbindungselement kann beispielsweise in Zusammenwirkung mit teilweise flächig ausgebildeten Stirnseiten eine Erhöhung der Steifheit des Aufbodenkanals in seiner Betriebsposition und eine verbesserte mechanische Stabilität erlauben.

Gemäß einer Ausgestaltung sind das erste Kanalelement und das zweite Kanalelement an ihren dem Verbindungselement zugewandten Stirnseiten in einem Querschnitt orthogonal zur Drehachse abgerundet ausgebildet. Durch die abgerundete Ausbildung wird erreicht, dass die Drehung der Kanalelemente zueinander auch dann nicht blockiert wird, wenn die Kanalelemente einander berühren. Ein Verklemmen wird verhindert. Die abgerundet ausgebildeten Kanalelemente berühren sich während des Drehens zueinander an wechselnden Stellen an ihren Abrundungen. Der Abstand der Lager, also der durch die zylinderförmigen Fortsätze definierten Drehachsen, bleibt gleich. Hierdurch wird die Stabilität bei der Drehung erhöht. Die Robustheit und Stabilität des Aufbodenkanals wird verbessert.

Gemäß einer Ausgestaltung weisen das erste Kanalelement und das zweite Kanalelement an ihren dem Verbindungselement zugewandten Stirnseiten orthogonal zur Drehachse ausgebildete Ausschnitte auf, um in der Transportposition des Aufbodenkanals das Leitungselement aufzunehmen. In der Transportposition des Aufbodenkanals verläuft das Leitungselement von einem Kanalelement zum anderen. Das Leitungselement wird demnach ebenfalls um 180° abgeknickt. Je nach Leitungselement ist dabei ein Mindestradius für das Abknicken erforderlich, um eine Beschädigung des Leitungselements zu vermeiden. Dieser Mindestknickradius kann beispielsweise durch einen Längenüberschuss des Leitungselements im Bereich des Knickens erreicht werden. Der Längenüberschuss kann jedoch dazu führen, dass das Leitungselement in der Transportposition des Aufbodenkanals übersteht und damit gegenüber Transporteinwirkungen exponiert ist. Die ausgebildeten Ausschnitte ermöglichen, dass das Leitungselement in der Transportposition des Aufbodenkanals durch sie hindurch verläuft. Hierdurch wird der Radius für das Abknicken ohne Längenüberschuss vergrößert. Dies führt dazu, dass eine Exposition des Leitungselements in der Transportposition vermieden wird.

In einer vorteilhaften Ausgestaltung verjüngen sich das erste Kanalelement und das zweite Kanalelement an ihren dem Verbindungselement zugewandten Stirnseiten im Bereich des Leitungselements keilförmig in Richtung des Verbindungselements, um einen Knickradius des Leitungselements in der Transportposition des Aufbodenkanals zu vergrößern. Der Mindestknickradius hängt von der Ausbildung der Kanalelemente in ihrem Bereich für die Aufnahme des Leitungselements ab. Insbesondere ist der Bereich der dem Verbindungselement zugewandten Stirnseite relevant. Durch die keilförmige Verjüngung wird der Knickradius bzw. der Mindestknickradius weiter erhöht. Das Leitungselement kann entlang der keilförmigen Ausbildung in einem größeren Abstand zur Drehachse verlaufen.

Gemäß einer Ausgestaltung umfassen das erste Kanalelement und/oder das zweite Kanalelement an ihren dem Verbindungselement zugewandten Stirnseiten ein elastisch deformierbares Material, insbesondere ein Elastomer, und/oder sind parallel zur Drehachse und orthogonal zu ihren Längsachsen teilweise flächig ausgebildet, um eine Selbsthemmung in der Betriebsposition des Aufbodenkanals zu erreichen. Durch ein deformierbares Material an der Stirnseite wird erreicht, dass eine Einrastposition vordefinierbar ist. Wenn zumindest einseitig eine Fläche an einem Kanalelement mit dem anderen Kanalelement in Kontakt ist und der Abstand zwischen den Kanalelementen durch das Verbindungselement festgelegt ist, kann die erfindungsgemäße Drehbewegung des einen Kanalelements um das andere Kanalelement nur ausgeführt werden, wenn das Kanalelement mit der Fläche an der Stirnseite im Bereich dieser Fläche verformt wird. Hierdurch kann erreicht werden, dass eine Lage der Kanalelemente zueinander, also ein bestimmter Drehwinkel, fixiert werden kann. Durch die Verwendung des elastischen Materials ist eine Deformierung bzw. ein Eindrücken des elastischen Materials (oder des Verbindungselements) erforderlich, um diese vordefinierte relative Lage zu verlassen. Vorteilhafterweise entspricht die Betriebsposition der vordefinierten Lage, in der die Kanalelemente in einem Winkel von 0° zueinander stehen, also entlang ihrer Längsachsen hintereinander angeordnet sind. Hierdurch wird die Stabilität des Aufbodenkanals in der Betriebsposition erhöht und der Auf- und Abbau weiter vereinfacht.

In einer weiteren Ausgestaltung sind die Kanalelemente symmetrisch bezüglich einer Ebene orthogonal zu ihren Längsachsen aufgebaut und können an beiden Stirnseiten über weitere Verbindungselemente mit weiteren Kanalelementen verbunden werden. Vorteilhafterweise erlaubt die Erfindung eine Kombination einer Mehrzahl an Kanalelementen. Die Kanalelemente sind über Verbindungselemente miteinander verbunden. Die Kanalelemente können aufeinander gefaltet werden, sodass sich in der Transportposition eine Art Stapel ergibt. Der Aufbau in die Betriebsposition erfolgt durch ein Auseinanderfalten in der Art einer Ziehharmonika beziehungsweise eines Faltenbalgs. In der Transportposition ist ein Kanalelement jeweils mit seiner Oberseite mit einem ersten benachbarten Kanalelement und mit seiner Unterseite mit einem weiteren Kanalelement in Kontakt. Durch die Verwendung mehrerer Kanalelemente können im Prinzip abhängig vom Anwendungsszenario Aufbodenkanäle beliebiger Länge realisiert werden. Die Kanalelemente bieten an beiden Stirnseiten bezüglich ihrer Längsachsen entsprechende Anschlussstellen für Verbindungselemente bzw. weitere Kanalelemente. Beispielsweise können beidseitig zylinderförmige Fortsätze vorgesehen sein, die mittels eines doppelhakenförmigen Verbindungselements verbunden werden können. Die symmetrische Ausgestaltung erlaubt eine kostengünstige Fertigung beispielsweise im Spritzgussverfahren.

In einer weiteren vorteilhaften Ausgestaltung umfasst der Aufbodenkanal weiterhin ein drittes Kanalelement und ein viertes Kanalelement, die durch ein zweites Verbindungselement verbunden sind, wobei das dritte Kanalelement oder das vierte Kanalelement mit dem ersten oder dem zweiten Kanalelement durch ein drittes Verbindungselement verbunden sind. Diese Ausgestaltung betrifft demnach einen erfindungsgemäßen Aufbodenkanal bei dem vier Kanalelemente durch Verbindungselemente verbunden sind. Die vier Kanalelemente können beispielsweise jeweils eine Länge von ungefähr 58 cm oder auch einem Meter haben, sodass sich eine Gesamtlänge des Aufbodenkanals von ungefähr 5 Metern beziehungsweise 9 Metern ergibt.

In einer Ausgestaltung sind das erste Kanalelement und das zweite Kanalelement zur Aufnahme eines elektrischen Leiters entlang ihrer Längsachsen und/oder zur Aufnahme einer Antenne, insbesondere einer Patchantenne oder einer Slotantenne, die durch den elektrischen Leiter ansteuerbar ist, ausgebildet. Der Aufbodenkanal weist entsprechende Einlegemöglichkeiten für Leitungen und Antennen auf. Oft ist die Verwendung einer separaten Antenne pro Kanalelement besonders vorteilhaft.

In einer Ausgestaltung sind die Kanalelemente in einem Querschnitt orthogonal zu ihren Längsachsen beidseitig keilförmig ausgebildet, um in der Betriebsposition des Aufbodenkanals ein Überqueren des Leitungselements durch Personen und/oder Fahrzeuge zu ermöglichen. Durch die Keilform wird ein flaches Aufliegen auf dem Untergrund gewährleistet. Die Unfallgefahr bzw. die Komforteinschränkung beim Überqueren des Aufbodenkanals mit einem Fahrzeug oder zu Fuß wird reduziert.

In einer Ausgestaltung umfassen das erste Kanalelement und das zweite Kanalelement jeweils ein Bodenelement mit einer Ausnehmung und ein Abdeckelement mit einem Klemmfortsatz, wobei das Bodenelement durch ein Eingreifen des Klemmfortsatzes in die Ausnehmung trennbar mit dem Abdeckelement verrastet werden kann. Durch diesen Verrastmechanismus wird eine einfache Möglichkeit geschaffen, Zugang zum Leitungselement bzw. zu einer Antenne im Aufbodenkanal zu bekommen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird nachfolgend anhand einiger ausgewählter Ausführungsbeispiele im Zusammenhang mit den beiliegenden Zeichnungen näher beschrieben und erläutert. Es zeigen:
- Fig. 1: eine perspektivische Darstellung eines erfindungsgemäßen Aufbodenkanals in der Betriebsposition;
- Fig. 2: eine perspektivische Darstellung eines erfindungsgemäßen Aufbodenkanals in der Transportposition;
- Fig. 3: eine Schnittdarstellung einer Verbindung zweier Kanalelemente mit einem Verbindungselement in der Betriebsposition des Aufbodenkanals;
- Fig. 4: eine Schnittdarstellung einer Verbindung zweier Kanalelemente mit einem Verbindungselement in der Transportposition des Aufbodenkanals;
- Fig. 5: eine Darstellung eines doppelhakenförmig ausgebildeten Verbindungselements;
- Fig. 6: eine Darstellung eines Kanalelements mit vier eingehakten Verbindungselementen;
- Fig. 7: eine Darstellung eines Aufbodenkanals mit vier Kanalelemente in der Betriebsposition;
- Fig. 8: eine Darstellung eines Aufbodenkanals mit einer Mehrzahl an Kanalelementen in der Transportposition;
- Fig. 9: eine Schnittdarstellung eines Ausschnitts an der Stirnseite eines Kanalelements und einer keilförmigen Verjüngung im Bereich des Leitungselements;
- Fig. 10: eine Darstellung eines beispielhaften Verlauf eines Leitungselements in der Transportposition des Aufbodenkanals;
- Fig. 11: eine Darstellung einer erfindungsgemäßen Bodenantenne mit einem Aufbodenkanal, einer Antenne und einem Leitungselement; und
- Fig. 12: eine Darstellung eines erfindungsgemäßen Zeitmesssystems.

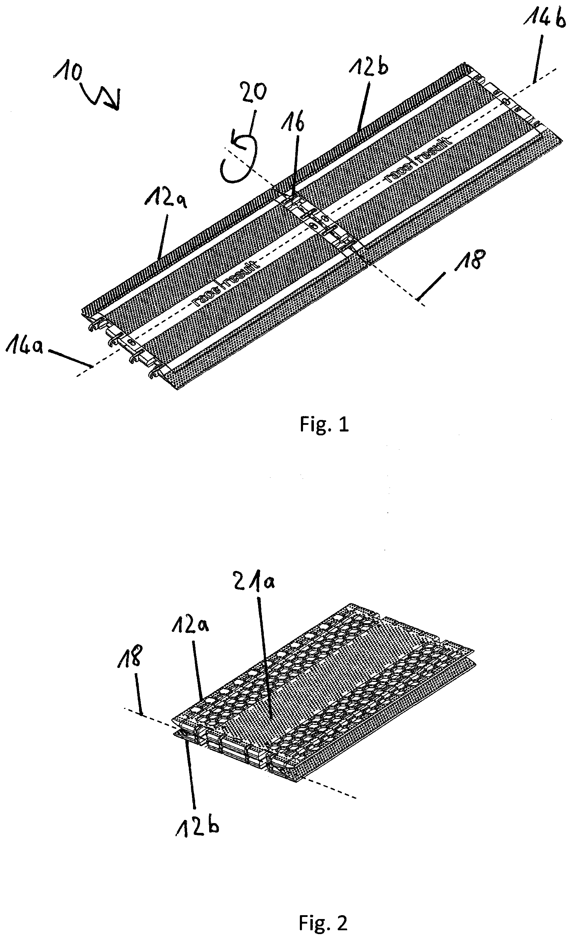

Fig. 1 zeigt ein Ausführungsbeispiel eines erfindungsgemäßen Aufbodenkanals 10. Dargestellt ist ein Aufbodenkanal zum Einsatz in der Zeitmessung bei einer Sportveranstaltung. Diese Art von Aufbodenkanal kann beispielsweise im Start- und Zielbereich oder auch im Bereich einer Zwischenzeitmessung einer Sportveranstaltung eingesetzt werden, wobei durch den Aufbodenkanal ein elektrischer Leiter zum Kontaktieren von Antennen sowie eine Antenne geschützt wird. Auf seiner Oberseite weist der Aufbodenkanal 10 vorteilhafterweise eine Riffelung auf, um ein Ausrutschen von Personen beim Überqueren des Aufbodenkanals 10 zu vermeiden. Es versteht sich, dass das Prinzip der vorliegenden Erfindung auch in anderen Anwendungsbereichen, wie zum Beispiel im Bereich der Schlauchbrücken, eingesetzt werden kann.

Im Aufbodenkanal 10 (in der dargestellten perspektivischen Ansicht nicht sichtbar) verläuft ein Leitungselement (im Bereich der Zeitmessung üblicherweise ein elektrischer Leiter zum Kontaktieren einer Antenne), das durch den Aufbodenkanal 10 mechanisch vor externen Krafteinwirkungen geschützt werden soll. Insbesondere nimmt der Aufbodenkanal 10 Kräfte auf, die von Sportlern und Fahrzeugen ausgeübt werden. Der Aufbodenkanal 10 umfasst ein erstes Kanalelement 12a und ein zweites Kanalelement 12b. Das Leitungselement verläuft im Inneren dieser Kanalelemente 12a, 12b im Wesentlichen entlang der Längsachsen 14a, 14b der Kanalelemente 12a, 12b. Zumeist tritt das Leitungselement an der einen Stirnseite eines Kanalelements in das Kanalelement ein und an der anderen Stirnseite wieder aus. Wenn das Kanalelement an einer Stirnseite mit einem weiteren Kanalelement verbunden ist, kann das Leitungselement vom einen Kanalelement direkt in das andere Kanalelement übergeleitet werden.

Der in der Fig. 1 dargestellte Aufbodenkanal 10 befindet sich in der Betriebsposition, in der er flach auf den Untergrund aufgelegt werden kann. In der Betriebsposition sind die Kanalelemente entlang ihrer Längsachsen 14a, 14b bzw. entlang einer gemeinsamen Längsachse hintereinander angeordnet. Durch die Anordnung hintereinander wird eine Länge erreicht, durch die ein Leitungselement über eine Straße oder über einen Feldweg geleitet werden kann.

Die Kanalelemente 12a, 12b sind an ihren Stirnseiten über ein Verbindungselement 16 verbunden. Im dargestellten Ausführungsbeispiel sind die Kanalelemente über mehrere weitere Verbindungselemente verbunden, wodurch die Stabilität weiter erhöht wird. Die Funktion wird durch das Vorhandensein mehrerer Verbindungselemente im vorliegenden Ausführungsbeispiel nicht beeinflusst. Im Folgenden wird die Singularform des Verbindungselements verwendet, wobei es sich versteht, dass auch mehrere Verbindungselemente eingesetzt werden können.

Das Verbindungselement 16 ist gelenkartig ausgebildet. Das Verbindungselement 16 erlaubt eine Drehung der Kanalelemente 12a, 12b zueinander. Dargestellt ist ein beispielhafter Verlauf einer Drehachse 18, um die die Kanalelemente 12a, 12b gegenüber einander gedreht werden können. Der dargestellte Pfeil 20 visualisiert die mögliche Drehbewegung.

Durch eine Drehbewegung der Kanalelemente 12a, 12b zueinander bezüglich der Drehachse 18 kann der Aufbodenkanal von der Betriebsposition, wie in Fig. 1 dargestellt, in die Transportposition, wie in Fig. 2 dargestellt, gebracht werden. Die Drehachse 18 verläuft dabei vorteilhafterweise orthogonal zu den Längsachsen 14a, 14b der Kanalelemente 12a, 12b. Im dargestellten Ausführungsbeispiel verläuft die Drehachse 18 weiterhin parallel zum Untergrund bzw. parallel zu einer Querrichtung der Kanalelemente 12a, 12b. Die Drehachse 18 kann sich während des Drehens der Kanalelemente 12a, 12b parallel zu sich selbst verschieben und muss nicht eindeutig definiert sein.

In Fig. 2 ist der Aufbodenkanal 10 in seiner Transportposition dargestellt. Das erste Kanalelement 12a ist um die Drehachse 18 gedreht und befindet sich auf dem zweiten Kanalelement 12b. In anderen Worten wird das erste Kanalelement 12a auf das zweite Kanalelement 12a geklappt oder gefaltet. In Fig. 2 ist demnach die Unterseite 21a des ersten Kanalelements 12a zu sehen. Die Kanalelemente 12a, 12b sind parallel zueinander angeordnet, insbesondere sind ihre Längsachsen parallel zueinander orientiert. Die Oberseiten der Kanalelemente 12a, 12b befinden sich in Kontakt zueinander. Abgesehen von der in Fig.2 dargestellten Drehung des ersten Kanalelements 12a auf das zweite Kanalelement 12b kann es auch möglich sein, dass das erste Kanalelement 12a unter das zweite Kanalelement 12b gedreht (geklappt) wird, sodass die Unterseiten der Kanalelemente 12a, 12b in Kontakt zueinander sind.

Auch in der Transportposition des Aufbodenkanals 10 sind die Kanalelemente 12a, 12b durch das Verbindungselement 16 verbunden. Üblicherweise ist das Leitungselement in der Transportposition des Aufbodenkanals 10 in den Kanalelementen 12a, 12b aufgenommen. Entsprechend ist das Leitungselement im Bereich des Verbindungselements 16 abgeknickt oder gebogen.

Im Vergleich mit früheren Aufbodenkanälen, bei denen das Verbindungselement nicht erfindungsgemäß gelenkartig ausgebildet war, erlaubt die vorliegende Erfindung das Einnehmen der Transportposition bzw. das Auf- und Abbauen des Aufbodenkanals ohne weitere Montageschritte, wie zum Beispiel das Zusammensetzen der Kanalelemente oder das Einlegen des Leitungselements nach dem Zusammensetzen, durchzuführen. Der Auf- und Abbau kann damit effizienter erfolgen. Zudem können ohne weiteren Aufwand auch kürzere Kanalelemente verwendet werden, sodass der Aufbodenkanal in seiner Transportposition weniger sperrig ist und einfacher transportiert werden kann.

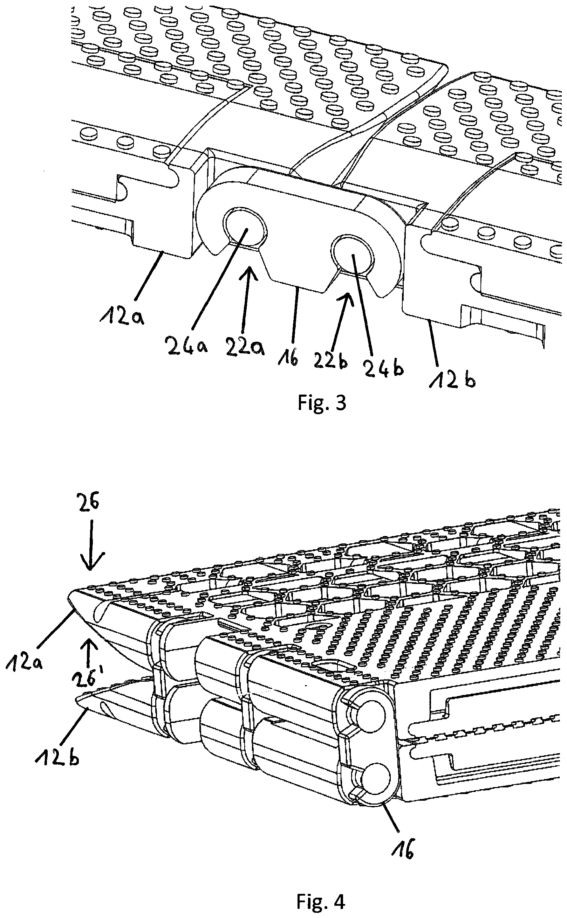

In Fig. 3 ist ein Ausschnitt einer Schnittansicht des Aufbodenkanals im Bereich des Verbindungselements 16 dargestellt. Der dargestellte Aufbodenkanal befindet sich in der Betriebsposition. Das gelenkartig ausgebildete Verbindungselement 16 verbindet die beiden Kanalelemente 12a, 12b. Das Verbindungselement 16 ist einstückig ausgebildet und weist beidseitig Aussparungen 22a, 22b auf, die zylinderförmige Fortsätze 24a, 24b an den Kanalelementen 12a, 12b umfassen. Die zylinderförmigen Fortsätze 22a, 22b sind bevorzugt auf beiden Seiten am jeweiligen Kanalelement 12a, 12b fixiert, können jedoch auch nur einseitig fixiert sein. Durch die zylinderförmigen Fortsätze 24a, 24b sind Lagerpunkte definiert, um die das Verbindungselement 16 gedreht werden kann. Das dargestellte Verbindungselement 16 ist beidseitig drehbar gelagert. Durch eine Drehung des Verbindungelements 16 kann eine Drehung der Kanalelemente 12a, 12b zueinander erfolgen. Die Drehung kann in beide Richtungen erfolgen. Das Verbindungselement 16 bildet sozusagen eine Art Doppelscharnier.

In Fig. 4 ist eine Schnittansicht durch den Aufbodenkanal in der Transportposition dargestellt. Im Vergleich zu Fig. 3 ist das Verbindungselement gegenüber beiden Kanalelementen 12a, 12b gedreht, sodass die Kanalelemente 12a, 12b parallel zueinander angeordnet sind. Die Drehachse der Drehung der Kanalelemente 12a, 12b zueinander kann demnach durch die beiden Lagerpunkte definiert sein. Ein Teil der Drehung erfolgt um den ersten Lagerpunkt, ein weiterer Teil der Drehung erfolgt um den zweiten Lagerpunkt.

Das Verbindungselement 16 weist bevorzugt gegenüber jedem der beiden Kanalelemente einen Drehfreiheitsgrad von 180° auf. Demnach kann das Verbindungselement 16 ausgehend von seiner 0° Stellung in der Betriebsposition des Aufbodenkanals jeweils in beide Richtungen um 90° gedreht werden. Im Zusammenspiel mit einer entsprechenden Lagerung am anderen Kanalelement, die ebenfalls einen Drehfreiheitsgrad von 180° aufweist, ergibt sich somit ein Gesamtfreiheitsgrad von 360° der Kanalelemente 12a, 12b zueinander. Folglich können die verbundenen Kanalelemente 12a, 12b komplett umeinander gedreht werden, sodass ein beidseitiges Zusammenklappen ermöglicht wird. Einerseits können die Kanalelemente 12a, 12b also mit ihren Unterseiten 26 in Kontakt zueinander gebracht werden und andererseits mit ihren Oberseiten 26'.

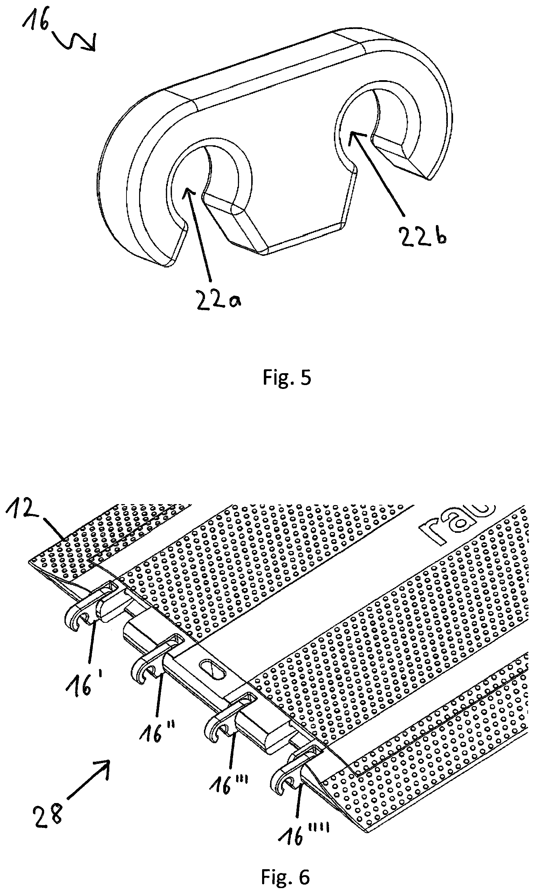

In Fig. 5 ist eine Detailansicht des Verbindungselements 16 dargestellt. Das Verbindungselement weist beidseitig Aussparungen 22a, 22b auf und ist insofern doppelhakenförmig ausgebildet, als die Aussparungen 22a, 22b einseitig geöffnet sind. Die Aussparungen 22a, 22b weisen einen kreisabschnittförmigen Querschnitt auf. Der Durchmesser des durch die Aussparungen 22a, 22b definierten Innenkreises entspricht im Wesentlichen dem Außendurchmesser der zylinderförmigen Fortsätze. Durch die dargestellte doppelhakenförmige Ausbildung wird ein einfaches Zusammensetzen mit den Kanalelementen ermöglicht. Insbesondere können die Kanalelemente durch Zusammenhaken mit dem Verbindungselement lösbar verbunden bzw. festgelegt werden. Hierzu wirken die Aussparungen mit zylinderförmigen Fortsätzen an den Kanalelementen zusammen.

Vorteilhafterweise besteht das Verbindungselement 16 aus einem elastisch deformierbaren Material, sodass die einseitig offenen Aussparungen 22a, 22b als Feder wirken können. Das Verbindungselement 16 verformt sich während des Aufnehmens der zylinderförmigen Fortsätze elastisch und entspannt sich wieder, wenn die zylinderförmigen Fortsätze vollständig umfasst sind. Hierzu sind die Öffnungen der Aussparungen 22a, 22b trichterförmig ausgebildet, sodass sich die Aussparungen 22a, 22b beim Aufdrücken auf die zylinderförmigen Fortsätze aufbiegen können. Es ist zudem möglich, dass das Verbindungselement 16 die Kanalelemente unter Spannung verbindet, dass also ein Abstand der Mittelpunkt der Aussparungen in einem entspannten Zustand größer ist als in einem Zustand, in dem das Verbindungselement zwei Kanalelemente verbindet.

In anderen Ausführungsformen der Erfindung kann das Verbindungselement auch nur einseitig drehbar gelagert sein. Demnach kann nur auf der Seite des einen Kanalelements ein Lagerpunkt definiert sein und das Verbindungselement mit dem anderen Kanalelement fest verbunden sein. Ebenfalls möglich ist, dass die Aussparungen im Verbindungselement nicht einseitig offen, sondern geschlossen sind. Die Montage kann dann beispielsweise durch Zusammensetzen mehrerer Teile erfolgen.

Des Weiteren ist ebenfalls eine Umkehrung des dargestellten Prinzips der drehbaren Lagerung insofern möglich, als die zylinderförmigen Fortsätze auch am Verbindungselement vorgesehen sein können und mit Aussparungen in den Kanalelementen zusammenwirken können. In diesem Fall könnte das Verbindungselement beispielsweise dahingehend gelenkartig ausgebildet sein, dass es knochenförmig ausgebildet ist, wobei zwei zylindrische Teilstücke durch ein Verbindungsteilstück verbunden sind. Die zylindrischen Teilstücke bilden die zylinderförmigen Fortsätze und können in entsprechende Aussparungen in den Kanalelementen eingreifen.

In weiteren Ausführungsformen der Erfindung ist es auch möglich, dass das Verbindungselement insofern gelenkartig ausgebildet ist, dass es mit einem oder mit beiden Kanalelementen fest verbunden ist und eine eigene Elastizität aufweist. Die Drehung der Kanalelemente zueinander erfolgt dann durch elastische Verformung des Verbindungselements. Alternativ kann das Verbindungselement auch mit einem oder mit beiden Kanalelementen fest verbunden und als Gelenk ausgebildet sein. Weitere gelenkartige Ausbildungen zum Erreichen derselben Funktion sind denkbar.

In Fig. 6 ist die Stirnseite 28 eines Kanalelements 12 dargestellt. Im dargestellten Ausführungsbeispiel sind vier Verbindungselemente 16', 16", 16"', 16"" vorgesehen, um das Kanalelemente 12 mit einem benachbarten Kanalelement zu verbinden. Die Funktion des einzelnen Verbindungselements wird durch die Verwendung mehrere Verbindungselemente nicht beeinflusst. Die Stabilität kann erhöht werden. Bevorzugt sind die mehreren Verbindungselemente 16', 16", 16"', 16"" identisch ausgebildet, wobei auch die Verwendung unterschiedlich ausgebildeter Verbindungselemente möglich ist. Es versteht sich, dass auch mehr oder weniger als vier identische oder unterschiedlich ausgebildete Verbindungselemente verwendet werden können. Wie insbesondere in der Fig. 6 dargestellt kann hierin die Stirnseite 28 eines ersten Kanalelements den gesamten dem zweiten Kanalelement zugewandten Bereich (in der Betriebsposition des Aufbodenkanals) bzw. den dem Verbindungselement zugeordneten Bereich des Kanalelements bezeichnen. Ebenfalls kann die Stirnseite aber auch die in der Betriebsposition dem zweiten Kanalelement zugewandte Stirnfläche des ersten Kanalelements bezeichnen.

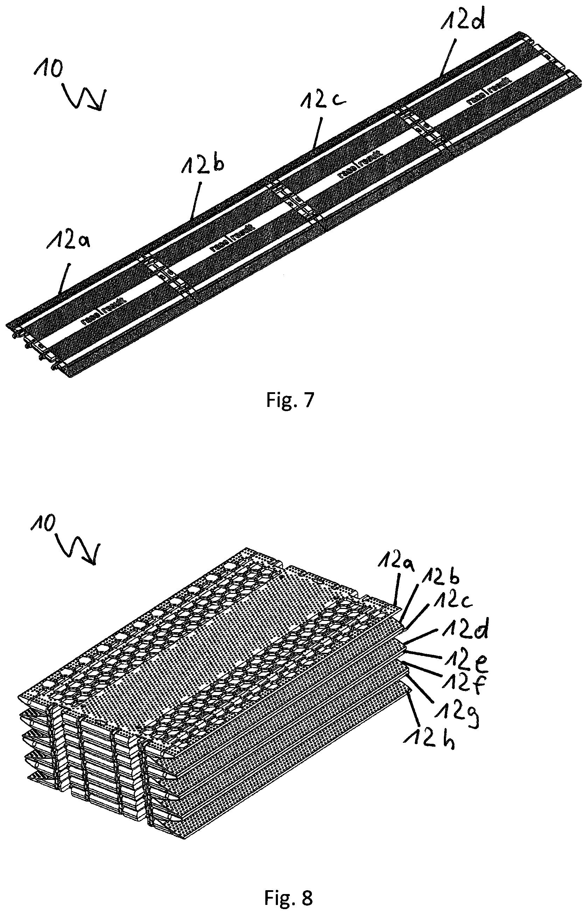

In Fig. 7 ist ein Aufbodenkanal 10 mit insgesamt vier Kanalelementen 12a, 12b, 12c, 12d dargestellt. Der Aufbodenkanal 10 befindet sich in der Betriebsposition zur Auflage auf dem Untergrund. Jedes Kanalelement ist mit benachbarten Kanalelementen stirnseitig über ein Verbindungselement verbunden. In der dargestellten Ausführungsform sind die Kanalelemente spiegelbildlich bezüglich einer Querachse orthogonal zu ihrer Längsachse ausgebildet, sodass im Prinzip eine beliebige Anzahl an Kanalelementen zusammengefügt werden kann. Hierdurch wird es ermöglicht, Aufbodenkanäle mit beliebiger Länge auf Basis derselben Grundkomponenten bereitzustellen. Bei einer Laufsportveranstaltung wird es also möglich, die Streckenführung im Start- und Zielbereich oder auch im Bereich der Zwischenzeitmessung beliebig breit zu gestalten. Dies ist insbesondere bei Massensportveranstaltungen von Vorteil.

In Fig. 8 ist ein Aufbodenkanal 10 mit insgesamt acht Kanalelementen 12a-12h in der Transportposition dargestellt. Durch den Freiheitsgrad von 360° zwischen zwei benachbarten Kanalelementen wird ein Zusammenfalten in der Art einer Ziehharmonika ermöglicht. Beispielsweise ist das Kanalelement 12d mit seiner Oberseite in Kontakt mit der Oberseite des benachbarten Kanalelements 12c und mit seiner Unterseite in Kontakt mit der Unterseite des benachbarten Kanalelements 12e.

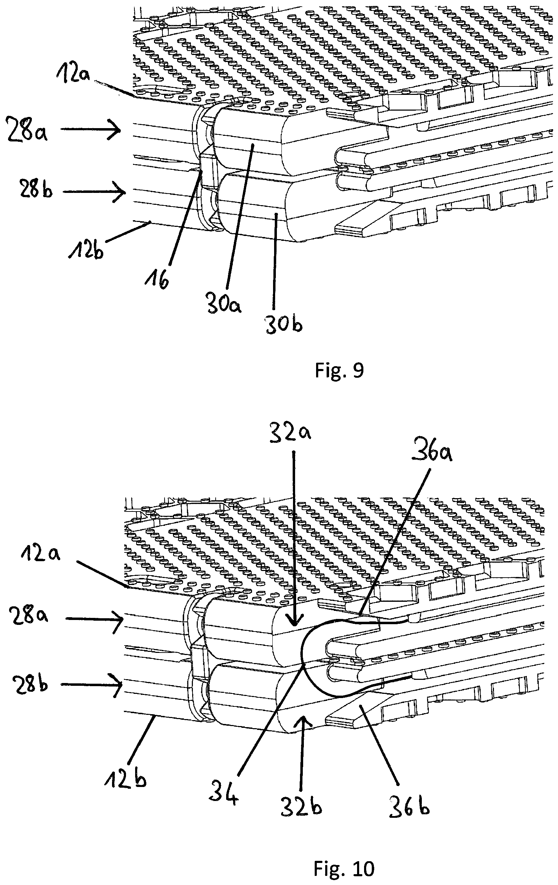

In Fig. 9 ist eine Detailansicht zweier Kanalelemente 12a, 12b im Bereich ihrer Stirnseiten, an denen sie mit einem Verbindungselement 16 verbunden sind, dargestellt. Die Kanalelemente 12a, 12b sind im Bereich ihrer Stirnseiten 28a, 28b abgerundet ausgebildet. Durch die abgerundete Ausbildung wird die Drehung der Kanalelemente 12a, 12b umeinander bei konstantem Abstand möglich. Der Abstand zwischen den Kanalelementen 12a, 12b wird durch das Verbindungselement 16 konstant gehalten. Durch die abgerundete Ausbildung bleibt der Abstand auch während der Drehung konstant, wodurch ein definierter und stabiler Verlauf der Drehung ermöglich ist. Die Abrundung entspricht somit einer zumindest partiellen Verrundung oder Anfasung der Kanalelemente an ihren Stirnseiten.

Bevorzugt sind die Kanalelemente 12a, 12b im Bereich ihrer Stirnseiten zudem teilweise flächig ausgebildet. Die Kanalelemente 12a, 12b weisen also in Richtung ihrer Stirnseiten 28a, 28b Flächen 30a, 30b auf. In der Betriebsposition des Aufbodenkanals sind die Flächen 30a, 30b parallel und in Kontakt zueinander. Dadurch, dass der Abstand zwischen den Kanalelementen 12a, 12b durch das Verbindungselement 16 definiert ist, ist eine Drehung der Kanalelemente 12a, 12b umeinander nur durch eine elastische Verformung möglich. Einerseits kann das Verbindungselement 16 elastisch deformierbar ausgebildet sein und sich bei der Drehung aus der Kontaktierung der Flächen 30a, 30b verformen. Demnach kann der Abstand zwischen den Aussparungen im Verbindungselement größer oder kleiner sein. Andererseits können auch die Kanalelemente 12a, 12b im Bereich ihrer Stirnseiten elastisch deformierbar sein und sich bei der Drehung verformen. Hierdurch wird eine Fixierung bzw. eine Selbsthemmung der Kanalelemente 12a, 12b zueinander in der Betriebsposition des Aufbodenkanals erreicht. Die Stabilität und Steifheit des Aufbodenkanals in der Betriebsposition kann erhöht werden. Dadurch, dass die Stirnseiten der Kanalelemente in der Betriebsposition des Aufbodenkanals in Kontakt stehen, wird eine Selbsthemmung des Aufbodenkanals bzw. der Kanalelemente in der Betriebsposition des Aufbodenkanals erreicht. Insbesondere kann durch ein elastisches Material an den Stirnseiten oder durch ein elastisches Verbindungselement zwischen den beiden Kanalelementen eine Zugkraft bewirkt werden, durch die die Selbsthemmung erreicht wird. Zusätzlich oder alternativ kann die Selbsthemmung durch eine teilweise flächige Ausbildung der Kanalelemente an ihren Stirnseiten erreicht werden. Wie insbesondere in der Fig. 9 dargestellt bezeichnet eine teilweise flächige Ausbildung zumindest einer Stirnseite 28a, 28b eine teilweise Ausbildung der Stirnseite als flache, orthogonal zur Längsachse der Kanalelemente verlaufende Ebene 30a, 30b. Durch die Selbsthemmung wird ein Spiel zwischen den Kanalelementen wird verhindert. Insbesondere wird die Klappbewegung in die Transportposition gehemmt. Ebenfalls wird aber auch eine Drehung bzw. ein Spiel bezüglich einer Achse senkrecht zum Untergrund gehemmt. Die Selbsthemmung wirkt bezüglich aller möglichen Drehbewegungen der Kanalelemente zueinander.

In Fig. 10 ist erneut eine Detailansicht zweier Kanalelemente 12a, 12b im Bereich ihrer Stirnseiten dargestellt. Die Kanalelemente 12a, 12b weisen im Bereich ihrer Stirnseiten Ausschnitte 32a, 32b auf. Das Leitungselement 34 ist in den Kanalelementen aufgenommen und verläuft durch beide Kanalelemente 12a, 12b hindurch. Aufgrund der für eine ausreichende Stabilität erforderlichen Dicke der Kanalelemente 12a, 12b wäre beim Drehen der Kanalelemente 12a, 12b zueinander eine Überschusslänge des Leitungselements 34 nötig. Das Leitungselement 34 würde nur dann eine Drehung der Kanalelemente 12a, 12b zueinander nicht blockieren, wenn es ausreichend lang wäre, um die durch die Dicke der Kanalelemente bedingte Überschussstrecke vom stirnseitigen Austritt aus dem ersten Kanalelemente 12a zum stirnseitigen Eintritt in das zweite Kanalelement 12b überwinden zu können. Anders ausgedrückt sind die Stirnseiten 28a, 28b der Kanalelemente 12a, 12b zwar in der Betriebsposition des Aufbodenkanals in unmittelbarem Kontakt, in der Transportposition jedoch nicht. Wenn das Leitungselement also durch stirnseitige Öffnungen in den Kanalelementen 12a, 12b aus- und eintreten würde, wäre hierzu die erforderliche Länge in der Transportposition größer als in der Betriebsposition. Zudem würde das Leitungselement in der Transportposition über die Stirnseiten überstehen und wäre damit gegenüber externen Einwirkungen beim Transport exponiert.

Durch die vorgesehenen Ausschnitte 32a, 32b in den Kanalelementen 12a, 12b im Bereich ihrer Stirnseiten wird dies vermieden. Die Ausschnitte 32a, 32b nehmen in der Transportposition des Aufbodenkanals das Leitungselement 34 auf. Demnach ist keine Überschusslänge des Leitungselements notwendig, um die Drehung der Kanalelemente zueinander ausführen zu können. Die Ausschnitte 32a, 32b ermöglichen die Drehung der Kanalelemente 12a, 12b zueinander bei aufgenommenem Leitungselement 34, ohne dass eine Überschusslänge des Leitungselements vorgesehen sein muss.

Zudem wird das Leitungselement 34 beim Drehen der Kanalelemente 12a, 12b zueinander abgeknickt. Durch die Ausschnitte 32a, 32b wird ebenfalls bewirkt, dass der Abknickradius dabei größer sein kann, wodurch die mechanische Belastung des Leitungselements 34 verringert wird. Die Knickebene des Leitungselements wird sozusagen nach innen verschoben.

Weiterhin vorteilhaft ist eine keilförmige Ausgestaltung 36a, 36b der Kanalelemente 12a, 12b im Bereich des Verlaufs des Leitungselements 34. Die Kanalelemente 12a, 12b verjüngen sich in Richtung ihrer Stirnseiten 28a, 28b bzw. in Richtung des jeweils anderen Kanalelements in diesem Bereich, um den Knickradius des Leitungselements 34 weiter zu erhöhen, wenn sich der Aufbodenkanal in der Transportposition befindet. Hierdurch wird die mechanische Belastung des Leitungselements weiter vermindert. Die keilförmige Ausgestaltung kann dabei sowohl einseitig, also nur in Richtung der Ober- oder Unterseite des Kanalelements, als auch beidseitig erfolgen.

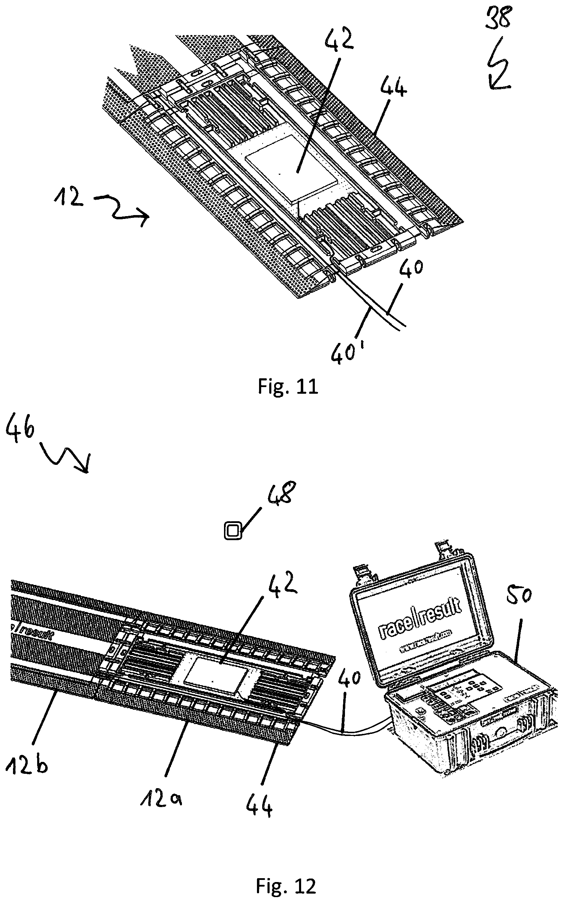

In Fig. 11 ist ein Abschnitt einer erfindungsgemäßen Bodenantenne 38 dargestellt. Die Bodenantenne 38 umfasst ein Kanalelement 12, einen elektrischen Leiter 40 und eine Antenne 42, im dargestellten Beispiel eine Patchantenne. Die Antenne 42 ist durch den elektrischen Leiter 40 ansteuerbar. Der elektrische Leiter 40 entspricht dem Leitungselement. Üblicherweise umfasst ein Kanalelement ein abnehmbares Abdeckelement, das mit einem Bodenelement 44 verrastet werden kann. Zur Verdeutlichung ist in Fig. 11 das Bodenelement 44 des Kanalelements 12 ohne Abdeckelement dargestellt.

Durch das Kanalelement 12 wird demnach einerseits das Leitungselement 40 und andererseits auch die Antenne 42 vor externen Krafteinwirkungen geschützt. Ein weiteres Kanalelement, bzw. eine weitere Bodenantenne kann über ein Verbindungselement verbunden sein. In diesem Fall ist es möglich, dass eine weitere Antenne im weiteren Kanalelement durch ein Leitungselement 40' angesteuert wird, das durch beide Kanalelemente hindurch verläuft. Der Verlauf der Leitungselemente 40, 40' ist in den Figuren jeweils beispielhaft dargestellt. Auch ein anderer Verlauf ist möglich.

In Fig. 12 ist ein Zeitmesssystem 46 gemäß einem Aspekt der vorliegenden Erfindung dargestellt. Das Zeitmesssystem 46 umfasst eine Bodenantenne 44 mit einem Aufbodenkanal 12a, 12b, einem elektrischen Leiter 40 und einer Antenne 42, einen mobilen Transponder 48, der drahtlos mit der Antenne 42 kommunizieren kann und eine Basisstation 50, die über den elektrischen Leiter 40 mit der Antenne 42 verbunden ist.

Das Zeitmesssystem 46 ist für einen bevorzugt mobilen Einsatz in der Zeitmessung bei Sportveranstaltungen wie beispielsweise Marathonveranstaltungen, Radrennen, Skirennen oder Autorennen ausgebildet. Das Zeitmesssystem 46 wird am Einsatzort aufgebaut und nach dem Einsatz wieder abgebaut. Durch die erfindungsgemäß klappbaren Kanalelemente der Bodenantenne werden ein unkomplizierter und schneller Auf- und Abbau sowie ein effizienter und platzsparender Transport ermöglicht. Durch die Kanalelemente werden elektrische Leiter und Antennen vor Krafteinwirkungen durch Sportler beim Überqueren der Zeitmessstelle geschützt.

In der (mobilen) Basisstation 50 werden Signale des Transponders 48 ausgewertet, die über die Antenne 42 empfangen werden. Der Transponder 48 wird von einem Sportler bei sich getragen. Bei dem Transponder 48 kann es sich beispielsweise um einen Aktiv- oder Passivtransponder handeln. Insbesondere kann es sich um einen UHF RFID Transponder handeln. Die Basisstation 50 kann beispielsweise mit einem zentralen Server in Kommunikation stehen, sodass die Ergebnisse der Zeitmessung in einem Netzwerk bereitgestellt werden können. Die Basisstation kann auch direkt an ein Anzeigegerät zum Anzeigen der gemessenen Zeiten angeschlossen sein.

## Patentansprüche

1. Aufbodenkanal (10) zum Verlegen eines Leitungselements (34) auf einem Untergrund und zum Schutz des Leitungselements (34) vor externen Krafteinwirkungen, mit:
einem ersten Kanalelement (12a) und einem zweiten Kanalelement (12b) zur Aufnahme des Leitungselements (34); und
einem Verbindungselement (16) zum Verbinden des ersten Kanalelements (12a) mit dem zweiten Kanalelement (12b) an Stirnseiten (28a, 28b) des ersten Kanalelements (12a) und des zweiten Kanalelements (12b),
wobei das Verbindungselement (16) gelenkartig ausgebildet ist und eine Drehbewegung des ersten Kanalelements (12a) in Bezug zu dem zweiten Kanalelement (12b) um eine Drehachse (18) orthogonal zu einer ersten Längsachse (14a) des ersten Kanalelements (12a) und orthogonal zu einer zweiten Längsachse (14b) des zweiten Kanalelements (12b) erlaubt, durch die der Aufbodenkanal (10) in eine Transportposition, in der die Kanalelemente (12a, 12b) parallel zueinander angeordnet sind und in eine Betriebsposition, in der die Kanalelemente (12a, 12b) entlang ihrer Längsachsen (14a, 14b) hintereinander angeordnet sind, gebracht werden kann, wobei das Leitungselement (34) ein elektrischer Leiter ist (40) und das erste Kanalelement (12a) und das zweite Kanalelement (12b) zur Aufnahme einer Antenne (42) ausgebildet sind, **gekennzeichnet dadurch, dass** sich der elektrische Leiter (40) und die Antenne (42) in der Transportposition im Aufbodenkanal (10) befinden.

2. Aufbodenkanal (10) nach einem der vorstehenden Ansprüche, **gekennzeichnet dadurch, dass** das Verbindungselement (16) einstückig ausgebildet ist und an seiner Kontaktstelle zum ersten Kanalelement (12a) und/oder an seiner Kontaktstelle zum zweiten Kanalelement (12b) drehbar gelagert ist.

3. Aufbodenkanal (10) nach einem der vorstehenden Ansprüche, **gekennzeichnet dadurch, dass**
- das erste Kanalelement (12a) und das zweite Kanalelement (12b) im Bereich ihrer dem Verbindungselement (16) zugeordneten Stirnseiten (28a, 28b) zylinderförmige Fortsätze (24a, 24b) aufweisen und das Verbindungselement (16) eine erste und eine zweite Aussparung (22a, 22b) zur Aufnahme der zylinderförmigen Fortsätze (24a, 24b) aufweist; und/oder
- das Verbindungselement (16) zylinderförmige Fortsätze (24a, 24b) aufweist und das erste Kanalelement (12a) und das zweite Kanalelement (12b) im Bereich ihrer dem Verbindungselement (16) zugeordneten Stirnseiten (28a, 28b) Aussparungen (22a, 22b) zur Aufnahme der zylinderförmigen Fortsätze (24a, 24b) aufweisen, wobei
- die zylinderförmigen Fortsätze (24a, 24b) mit den Aussparungen (22a, 22b) gelenkartig zusammenwirken, um das Verbindungselement (16) beidseitig drehbar zu lagern.

4. Aufbodenkanal (10) nach Anspruch 3, **gekennzeichnet dadurch, dass** ein erstes Drehlagerzwischen dem Verbindungselement (16) und dem ersten Kanalelement (12a) und ein zweites Drehlager zwischen dem Verbindungselement (16) und dem zweiten Kanalelement (12b), jeweils einen Freiheitsgrad von 180° aufweisen und einen Gesamtfreiheitsgrad des ersten Kanalelements (12a) und des zweiten Kanalelements (12b) von 360° bewirken.

5. Aufbodenkanal (10) nach einem der Ansprüche 3 oder 4, **gekennzeichnet dadurch, dass** das Verbindungselement (16) doppelhakenförmig zum Einhaken an den zylinderförmigen Fortsätzen (24a, 24b) ausgebildet ist, wobei die Aussparungen (22a, 22b) einen im Wesentlichen kreisabschnittförmigen Querschnitt aufweisen und ein Innenkreisradius der Aussparungen (22a, 22b) jeweils einem Radius der zylinderförmigen Fortsätze (24a, 24b) an den Kanalelementen (12a, 12b) entspricht.

6. Aufbodenkanal (10) nach Anspruch 5, **gekennzeichnet dadurch, dass**
das Verbindungselement (16) durch elastische Verformung lösbar an den zylinderförmigen Fortsätzen (24a, 24b) festlegbar ist; und/oder
der Abstand der Mittelpunkte der durch die kreisabschnittförmigen Aussparungen (22a, 22b) beschriebenen Innenkreise in einem ersten Zustand des Verbindungselements (16) durch elastische Verformung größer als in einem zweiten Zustand des Verbindungselements (16) ist.

7. Aufbodenkanal (10) nach einem der vorstehenden Ansprüche, **gekennzeichnet dadurch, dass** das erste Kanalelement (12a) und das zweite Kanalelement (12b) an ihren dem Verbindungselement (16) zugeordneten Stirnseiten (28a, 28b) in einem Querschnitt orthogonal zur Drehachse (18) abgerundet ausgebildet sind.

8. Aufbodenkanal (10) nach einem der vorstehenden Ansprüche, **gekennzeichnet dadurch, dass** das erste Kanalelement (12a) und das zweite Kanalelement (12b) an ihren dem Verbindungselement (16) zugeordneten Stirnseiten (28a, 28b) orthogonal zur Drehachse (18) ausgebildete Ausschnitte (32a, 32b) aufweisen, um in der Transportposition des Aufbodenkanals (10) das Leitungselement aufzunehmen.

9. Aufbodenkanal (10) nach Anspruch 8, **gekennzeichnet dadurch, dass** sich das erste Kanalelement (12a) und das zweite Kanalelement (12b) im Bereich ihrer dem Verbindungselement (16) zugeordneten Stirnseiten (28a, 28b) im Bereich des Leitungselements (34) keilförmig in Richtung des Verbindungselements (16) verjüngen, um einen Knickradius des Leitungselements (34) in der Transportposition des Aufbodenkanals (10) zu vergrößern.

10. Aufbodenkanal (10) nach einem der vorstehenden Ansprüche, **gekennzeichnet dadurch, dass** das erste Kanalelement (12a) und/oder das zweite Kanalelement (12b) an ihren dem Verbindungselement (16) zugeordneten Stirnseiten (28a, 28b) ein elastisch deformierbares Material, insbesondere ein Elastomer, umfassen und/oder parallel zur Drehachse (18) und orthogonal zu ihren Längsachsen (14a, 14b) teilweise flächig ausgebildet sind, um eine Selbsthemmung in der Betriebsposition des Aufbodenkanals (10) zu erreichen.

11. Aufbodenkanal (10) nach einem der vorstehenden Ansprüche, **gekennzeichnet dadurch, dass** die Kanalelemente (12a, 12b) symmetrisch bezüglich einer Ebene orthogonal zu ihren Längsachsen (14a, 14b) aufgebaut sind und an beiden Stirnseiten (28a, 28b) über weitere Verbindungselemente (16) mit weiteren Kanalelementen verbunden werden können.

12. Aufbodenkanal (10) nach einem der vorstehenden Ansprüche, weiterhin umfassend ein drittes Kanalelement (12c) und ein viertes Kanalelement (12d), die durch ein zweites Verbindungselement verbunden sind, **gekennzeichnet dadurch, dass**
das dritte Kanalelement (12c) oder das vierte Kanalelement (12d) mit dem ersten oder dem zweiten Kanalelement (12b) durch ein drittes Verbindungselement verbunden sind.

13. Aufbodenkanal (10) nach einem der vorstehenden Ansprüche, **gekennzeichnet dadurch, dass** das erste Kanalelement (12a) und das zweite Kanalelement (12b) zur Aufnahme eines elektrischen Leiters (40) entlang ihrer Längsachsen (14a, 14b) ausgebildet sind und/oder die Antenne (42) als Patchantenne oder Slotantenne ausgebildet ist und durch den elektrischen Leiter (40) ansteuerbar ist.

14. Bodenantenne (38) zum Einsatz in der Zeitmessung bei Sportveranstaltungen, mit:
- einem Aufbodenkanal (10) nach einem der vorstehenden Ansprüche;
- einem elektrischen Leiter (40), der in dem Aufbodenkanal (10) aufgenommen ist; und
- einer Antenne (42), insbesondere einer Patchantenne oder einer Slotantenne, die in dem Aufbodenkanal (10) aufgenommen und durch den elektrischen Leiter (40) ansteuerbar ist.

15. Zeitmesssystem (46) zur Zeitmessung bei Sportveranstaltungen, mit:
- einer Bodenantenne (38) nach Anspruch 14;
- einem mobilen Transponder (48) zur drahtlosen Übermittlung von Signalen an die Antenne (42); und
- einer mobilen Basisstation (50), die über den elektrischen Leiter (40) mit der Antenne (42) verbunden ist, zur Ansteuerung der Antenne (42) und zur Auswertung empfangener Signale von dem mobilen Transponder (48) zur Zeitmessung.

## Claims

1. Floor cable channel (10) for positioning a cable line element (34) on an underlying surface and for protecting the cable line element (34) from the effects of external forces, comprising:
a first channel element (12a) and a second channel element (12b) for receiving the cable line element (34); and
a connection element (16) for connecting the first channel element (12a) to the second channel element (12b) at front faces (28a, 28b) of the first channel element (12a) and the second channel element (12b),
wherein the connection element (16) is joint-like and allows a rotational movement of the first channel element (12a) relative to the second channel element (12b) about a rotational axis (18) orthogonal to a first longitudinal axis (14a) of the first channel element (12a) and orthogonal to a second longitudinal axis (14b) of the second channel element (12b), wherein, by means of said rotational movement, the floor cable channel (10) can be brought into a transport position in which the channel elements (12a, 12b) are parallel to each other, and into an operating position in which the channel elements (12a, 12b) are arranged one behind the other along their longitudinal axes (14a, 14b),
wherein the cable line element (34) is an electrical conductor (40) and the first channel element (12a) and the second channel element (12b) are designed to receive an antenna (42), **characterized in that**, in the transport position, the electrical conductor (40) and the antenna (42) are positioned inside the floor cable channel (10).

2. Floor cable channel (10) according to any one of the preceding claims, **characterized in that** the connection element (16) is formed as a one-piece element and is rotatably mounted at its contact point with the first channel element (12a) and/or at its contact point with the second channel element (12b).

3. Floor cable channel (10) according to any one of the preceding claims, **characterized in that**
- the first channel element (12a) and the second channel element (12b) have cylindrical extensions (24a, 24b) in the area of their front faces (28a, 28b) allocated to the connection element (16), and **in that** the connection element (16) has a first and a second recess (22a, 22b) for receiving the cylindrical extensions (24a, 24b); and/or
- the connection element (16) has cylindrical extensions (24a, 24b) and the first channel element (12a) and the second channel element (12b), in the area of their front faces (28a, 28b) allocated to the connection element (16), have recesses (22a, 22b) for receiving the cylindrical extensions (24a, 24b), wherein
- the cylindrical extensions (24a, 24b) and the recesses (22a, 22b) act together like joints so that the connection element (16) is rotatably mounted on both sides.

4. Floor cable channel (10) according to claim 3, **characterized in that** a first pivot bearing between the connection element (16) and the first channel element (12a) and a second pivot bearing between the connection element (16) and the second channel element (12b) each have a degree of freedom of 180° and effect a total degree of freedom of the first channel element (12a) and the second channel element (12b) of 360°.

5. Floor cable channel (10) according to one of the claims 3 or 4, **characterized in that** the connection element (16) is double hook-shaped for hooking into the cylindrical extensions (24a, 24b), wherein the recesses (22a, 22b) have an essentially circular-segment shaped cross-section, and an incircle radius of the recesses (22a, 22b) each corresponds to a radius of the cylindrical extensions (24a, 24b) at the channel elements (12a, 12b).

6. Floor cable channel (10) according to claim 5, **characterized in that**
the connection element (16) is detachably fixable to the cylindrical extensions (24a, 24b) by elastic deformation; and/or
the distance of the centers of the incircles described by the circular-segment shaped recesses (22a, 22b) is, by means of elastic deformation, greater in a first state of the connection element (16) than in a second state of the connection element (16).

7. Floor cable channel (10) according to any one of the preceding claims, **characterized in that** the first channel element (12a) and the second channel element (12b), at their front faces (28a, 28b) allocated to the connection element (16), are formed with rounded off edges in a cross-section orthogonal to the rotational axis (18).

8. Floor cable channel (10) according to any one of the preceding claims, **characterized in that** the first channel element (12a) and the second channel element (12b), at their front faces (28a, 28b) allocated to the connection element (16), have openings (32a, 32b) that are formed orthogonal to the rotational axis (18) to receive the cable line element when the floor cable channel (10) is in its transport position.

9. Floor cable channel (10) according to claim 8, **characterized in that** the first channel element (12a) and the second channel element (12b) in the area of their front faces (28a, 28b) allocated to the connection element (16), in the area of the cable line element (34) taper in the direction of the connection element (16) in order to increase a kinking radius of the cable line element (34) in the transport position of the floor cable channel (10).

10. Floor cable channel (10) according to any one of the preceding claims, **characterized in that** the first channel element (12a) and/or the second channel element (12b) at their front faces (28a, 28b) allocated to the connection element (16), comprise an elastically deformable material, in particular an elastomer, and/or are partly planar-shaped parallel to the rotational axis (18) and orthogonal to their longitudinal axes (14a, 14b) to provide a self-locking in the operating position of the floor cable channel (10).

11. Floor cable channel (10) according to any one of the preceding claims, **characterized in that** the channel elements (12a, 12b) are constructed symmetrically in relation to a plane orthogonal to their longitudinal axes (14a, 14b) and **in that** the channel elements (12a, 12b) can be connected at both front faces (28a, 28b) to further channel elements by further connection elements (16).

12. Floor cable channel (10) according to any one of the preceding claims, additionally comprising a third channel element (12c) and a fourth channel element (12d) connected by a second connection element, **characterized in that**
the third channel element (12c) or the fourth channel element (12d) is connected to the first or the second channel element (12b) by a third connection element.

13. Floor cable channel (10) according to any one of the preceding claims, **characterized in that** the first channel element (12a) and the second channel element (12b) are designed to receive an electrical conductor (40) along their longitudinal axes (14a, 14b) and/or **in that** the antenna (42) is designed as a patch antenna or slot antenna and can be controlled by the electrical conductor (40).

14. Floor antenna (38) for use in timing of sports events, comprising:
- a floor cable channel (10) according to any one of the preceding claims;
- an electrical conductor (40) received in the floor cable channel (10); and
- an antenna (42), in particular a patch antenna or a slot antenna, which is received in the floor cable channel (10) and can be controlled by the electrical conductor (40).

15. Time measuring system (46) for timing of sports events, comprising:
- a floor antenna (38) according to claim 14;
- a mobile transponder (48) for the wireless transmission of signals to the antenna (42); and
- a mobile base station (50), which is connected to the antenna (42) via the electrical conductor (40), for controlling the antenna (42) and for evaluating signals received from the mobile transponder (48) for timing.

## Revendications

1. Canal à poser au sol (10) servant à placer un élément de ligne (34) sur un sol et servant à la protection de l'élément de ligne (34) contre des effets de force externes, comprenant :
un premier élément de canal (12a) et un second élément de canal (12b) destinés à recevoir l'élément de ligne (34); et
un élément de liaison (16) servant à relier le premier élément de canal (12a) au second élément de canal (12b) par les parties frontales (28a, 28b) du premier élément de canal (12a) et du second élément de canal (12b),
dans lequel l'élément de liaison (16) est configuré de manière articulée et permet un mouvement de rotation du premier élément de canal (12a) par rapport au second élément de canal (12b) autour d'un axe de rotation (18) à l'orthogonale d'un premier axe longitudinal (14a) du premier élément de canal (12a) et à l'orthogonale d'un second axe longitudinal (14b) du second élément de canal (12b), par le biais duquel le canal à poser au sol (10) peut être mis dans une position de transport, dans laquelle les éléments de canal (12a, 12b) sont disposés de manière parallèle l'un par rapport à l'autre, et dans une position de service, dans laquelle les éléments de canal (12a, 12b) sont disposés l'un derrière l'autre le long de leurs axes longitudinaux (14a, 14b),
dans lequel l'élément de ligne (34) est un conducteur électrique (40) et le premier élément de canal (12a) et le second élément de canal (12b) sont configurés pour recevoir une antenne (42),
**caractérisé en ce que** le conducteur électrique (40) et l'antenne (42) se trouvent dans la position de transport dans le canal à poser au sol (10).

2. Canal à poser au sol (10) selon l'une quelconque des revendications précédentes, **caractérisé en ce que** l'élément de liaison (16) est formé d'une seule pièce et est monté de façon à pouvoir tourner sur son point de contact avec le premier élément de canal (12a) et/ou sur son point de contact avec le second élément de canal (12b).

3. Canal à poser au sol (10) selon l'une quelconque des revendications précédentes, **caractérisé en ce que** :
- le premier élément de canal (12a) et le second élément de canal (12b) comprennent dans la zone de leurs faces frontales (28a, 28b) associées à l'élément de liaison (16) des prolongements cylindriques (24a, 24b) et l'élément de liaison (16) comprend une première et une seconde encoche (22a, 22b) pour recevoir les prolongements cylindriques (24a, 24b), et/ou
- l'élément de liaison (16) comprend des prolongements cylindriques (24a, 24b) et le premier élément de canal (12a) et le second élément de canal (12b) comprennent dans la zone de leurs faces frontales (28a, 28b) associées à l'élément de liaison (16) des encoches (22a, 22b) pour recevoir les prolongements cylindriques (24a, 24b), dans lequel
- les prolongements cylindriques (24a, 24b) coopèrent de façon articulée avec les encoches (22a, 22b) pour supporter en rotation l'élément de liaison (16) des deux côtés.

4. Canal à poser au sol (10) selon la revendication 3, **caractérisé en ce qu'**un premier palier rotatif entre l'élément de liaison (16) et le premier élément de canal (12a) et un second palier rotatif entre l'élément de liaison (16) et le second élément de canal (12b) présentent respectivement un degré de liberté de 180° et engendrent un degré de liberté total du premier élément de canal (12a) et du second élément de canal (12b) de 360°.

5. Canal à poser au sol (10) selon l'une quelconque des revendications 3 ou 4, **caractérisé en ce que** l'élément de liaison (16) est configuré en forme de double crochet pour accrocher aux prolongements cylindriques (24a, 24b), et dans lequel les encoches (22a, 22b) ont une section transversale essentiellement en forme de secteur de cercle et le rayon intérieur des encoches (22a, 22b) correspond respectivement au rayon des prolongements cylindriques (24a, 24b) sur les éléments de canal (12a, 12b).

6. Canal à poser au sol (10) selon la revendication 5, **caractérisé en ce que** l'élément de liaison (16) peut être fixé de manière détachable par déformation élastique sur les prolongements cylindriques (24a, 24b); et/ou **en ce que** la distance entre les centres des cercles intérieurs décrits par les encoches (22a, 22b) en forme de secteur de cercle par une déformation élastique dans un premier état de l'élément de liaison (16) est supérieure à celle produite dans un second état de l'élément de liaison (16).

7. Canal à poser au sol (10) selon l'une quelconque des revendications précédentes, **caractérisé en ce que** le premier élément de canal (12a) et le second élément de canal (12b) sont formés de manière arrondie au niveau de leurs faces frontales (28a, 28b) associées à l'élément de liaison (16) dans une section transversale orthogonale à l'axe de rotation (18).

8. Canal à poser au sol (10) selon l'une quelconque des revendications précédentes, **caractérisé en ce que** le premier élément de canal (12a) et le second élément de canal (12b) comportent sur leurs faces frontales (28a, 28b) associées à l'élément de liaison (16) des échancrures (32a, 32b) formées à l'orthogonale de l'axe de rotation (18), pour recevoir l'élément de ligne dans la position de transport du canal à poser au sol (10).

9. Canal à poser au sol (10) selon la revendication 8, **caractérisé en ce que** le premier élément de canal (12a) et le second élément de canal (12b) se rétrécissent en forme de coin dans la zone de leurs faces frontales (28a, 28b) associées à l'élément de liaison (16), dans la zone de l'élément de ligne (34), en direction de l'élément de liaison (16), afin d'agrandir le rayon de pliage de l'élément de ligne (34) dans la position de transport du canal à poser au sol (10).

10. Canal à poser au sol (10) selon l'une quelconque des revendications précédentes, **caractérisé en ce que** le premier élément de canal (12a) et/ou le second élément de canal (12b) comprennent, sur leurs faces frontales (28a, 28b) associées à l'élément de liaison (16), un matériau élastiquement déformable, notamment un élastomère, et/ou sont configurés en partie uniformément parallèlement à l'axe de rotation (18) et à l'orthogonale de leurs axes longitudinaux (14a, 14b), de manière à atteindre un autoblocage en position de service du canal à poser au sol (10).

11. Canal à poser au sol (10) selon l'une quelconque des revendications précédentes, **caractérisé en ce que** les éléments de canal (12a, 12b) sont formés de façon symétrique par rapport à un plan orthogonal à leurs axes longitudinaux (14a, 14b) et peuvent être raccordés à des éléments de canal supplémentaires au niveau de leurs deux faces frontales (28a, 28b) par des éléments de liaison (16) supplémentaires.

12. Canal à poser au sol (10) selon l'une quelconque des revendications précédentes, comprenant en outre un troisième élément de canal (12c) et un quatrième élément de canal (12d) qui sont reliés par un second élément de liaison,
**caractérisé en ce que** le troisième élément de canal (12c) ou le quatrième élément de canal (12d) sont reliés au premier ou au second élément de canal (12b) par un troisième élément de liaison.

13. Canal à poser au sol (10) selon l'une quelconque des revendications précédentes, **caractérisé en ce que** le premier élément de canal (12a) et le second élément de canal (12b) sont configurés pour recevoir un conducteur électrique (40) le long de leurs axes longitudinaux (14a, 14b) et/ou l'antenne (42) est conçue sous forme d'antenne planaire ou d'antenne à fentes et peut être excitée par le conducteur électrique (40).

14. Antenne de sol (38) destinée à être utilisée pour le chronométrage lors d'un événement sportif, comprenant :
- un canal à poser au sol (10) selon l'une des revendications précédentes,
- un conducteur électrique (40) qui est reçu dans le canal à poser au sol (10); et
- une antenne (42), notamment une antenne planaire ou une antenne à fentes qui est reçue dans le canal à poser au sol (10) et qui peut être excitée par le conducteur électrique (40).

15. Système de chronométrage (46) servant au chronométrage lors d'événements sportifs, comprenant :
- une antenne de sol (38) selon la revendication 14;
- un transpondeur mobile (48) permettant une transmission sans fil des signaux à l'antenne (42); et
- une station de base mobile (50) qui est reliée à l'antenne (42) par le conducteur électrique (40), destinée à exciter l'antenne (42) et à évaluer les signaux reçus du transpondeur mobile (48) pour le chronométrage.
